# EUROPEAN PATENT SPECIFICATION

(11) **EP 0 525 004 B1**
(45) Date of publication and mention of the grant of the patent: **03.02.1999**
(21) Application number: 91907575.4
(22) Date of filing: 09.04.1991
(51) Int. Cl.: D06N 7/00, C08L 95/00

(54) **FLOOR COVERING WITH BITUMEN BACKING LAYER**
FUSSBODENBELAG MIT BITUMEN-RÜCKSCHICHT
REVETEMENT DE SOL A COUCHE DORSALE EN BITUME

(30) Priority: 10.04.1990 GB 9008166
(43) Date of publication of application: 03.02.1993
(73) Proprietor: INTERFACE, Inc., La Grange, Georgia 30240 (US)
(72) Inventor: THOMPSON, Andrew, Craigavon, County Armagh (GB)
(74) Representative: Cresswell, Thomas Anthony
(86) International application number: GB9100553
(87) International publication number: WO9115625

(56) References cited:
- EP-A- 0 299 700
- DE-A- 3 527 525
- GB-A- 2 219 802
- PATENT ABSTRACTS OF JAPAN, Vol. 133, No. 67; & JP,A,01 123 862 (FUJI KOSAN), 16 May 1989.
- DATABASE WPI Derwent Publications Ltd., London, GB; AN 89-184022 & JP-A-1 123 862 (FUJI KOSAN KK) 16 May 1989

## Description

### Background of the Invention

Oxidized and polymer-modified bitumens are frequently used as a backing material in the manufacture of carpet tiles. The construction of these tiles is fairly complex and may consist of a fibrous, e.g. tufted, primary cloth which has been impregnated with a cured latex to stabilize the tufting, and laminated to a secondary backing cloth using the aforementioned bitumen.

In this application, severe physical demands are placed on the bitumen to control stress relaxation in the primary tufting cloth, to maintain and retain critical physical dimensions over a wide range of possible application conditions; to prevent excessive build up of static electricity which may damage electrical and computer hardware as well as physical discomfort to building occupants; and to maintain physical dimensions under static loading conditions such as would occur when heavy objects are placed on carpet tiles over an extended period of time.

The bitumen used must also possess characteristics in the molten phase which will allow easy preparation and processing, i.e. a suitable viscosity at application temperatures with maximum thermal stability and minimum dimensional instability when applied to the manufactured product.

It has been proposed in GB-A-2 219 802 A (Vulcanite Ltd.) to incorporate a low density polyethylene into bitumen for roofing and carpet tile backing purposes.

It has been found that such blends do not fulfill all of the demands placed on a bitumen used in the context of a carpet tile backing. The static loading and dimensional stability of a carpet tile produced using such a bitumen would not be commercially acceptable and would fall outside the standard requirements laid down by the carpet tile and floor laminating industry.

Self-adhesive bitumen compositions containing polyethylene or crystalline polypropylene have been suggested for use in carpet tiles with self-adhesive backing in GB-A-1 417 571 (Ruberoid Ltd.). Further, carpet tiles have been prepared employing a blend of bitumen and a minor amount of a thermoplastic styrenebutadiene-styrene block copolymer (SBS) as the integral backing layer in US-A-4,201,812 (Shell Oil Company). However, the block copolymer presents processing, compatibility, cost and other difficulties in its use as a carpet backing blend.

JP-A-1/123862 (Fuji Kosan KK) describes a composition for manufacturing anti-static carpet tile backing sheets. The composition contains bitumen, a conductivity donor and a thermoplastic resin which is preferably a crystalline polyolefin with a molecular weight of 900-4,000 and a softening point of at least 120°C or is an ethylene/α-olefin copolymer with a melt index of 0.2-20 g/10 min.

### SUMMARY OF THE INVENTION

This invention relates to floor coverings, eg. carpet tiles or flooring, having a bitumen composition backing layer, the bitumen compositions having improved dimensional stability, adhesion, static loading and electrical conductivity characteristics.

According to the present invention, there is provided a floor covering having a bitumen composition as a backing layer which fulfills all of the demands described earlier and also provides a considerable cost saving advantage over systems described earlier and already in operation.

Thus the present invention provides a floor covering having a bitumen composition backing layer, which bitumen composition comprises a blend of:
a) a dispersed phase of straight run bitumen having a penetration value of up to 100 dmm; and
b) up to 12 percent based on the weight of the bitumen composition, of, as continuous phase, a mixture of a high density polyethylene having a melt flow index (ASTM D-1238-70) of at least 0.2, and a low density polyethylene having a melt flow index (ASTM D1238-70) of at least 0.2;
and optionally comprises at least 40 percent, based on the weight of the filled bitumen composition, of a mineral filler material; the bitumen composition having a softening point of 115°C to 128°C measured in accordance with IP 58(83) and a penetration value of 10 to 15 dmm measured in accordance with IP 49(83).

A dmm is a tenth of a millimetre.

In one embodiment, the bitumen composition backing layer is a bitumen polymer filler blend comprising a minimum inert mineral filler material content of 40% w/w of the final bitumen composition. The bituminous component comprises a straight run bitumen of high asphaltene and resin content with a penetration value (IP 49/83) of 100 decimillimeters (dmm) or less and a blend containing a mixture of low density and high density polyethylenes. Preferably, the total polyethylene content does not exceed about 10% w/w of the final bitumen composition.

The composition used in the present invention is low cost and can be manufactured from locally available materials, that is, straight run bitumen, rather than blown or oxidized bitumen, and either virgin or preferably low cost scrap or recycled polyethylene as a modifier. The bitumen-polyethylene blends employed as a backing layer provide carpet tiles of improved dimensional stability and better electrical conductivity so that an antistatic agent is not required to meet existing IBM/ICL standards for conductivity.

In addition, the bitumen-polyethylene composition provides better adhesion due to the increased tackiness of the bitumen composition, so that there is an improved quality of lamination between the bitumen backing layer and the back surface of the latex-coated and cured, primary, needle-punched or tufted backing sheet. The bitumen composition permits a reduction in the application or coating temperature, resulting in energy savings and permitting the use of less expensive, lower melting point secondary backing sheets on the back surface of the tile, for example, the use of non-woven polypropylene sheets in place of higher melting point polyester or polyester-polypropylene backing sheets. The carpet tile produced has a fibrous face surface and a back surface integrally bonded to the bitumen composition as a backing layer and typically a secondary backing sheet secured to the back surface of the bitumen backing layer.

In comparison to the use of styrene-butadienestyrene block copolymers, there are no problems relating to bitumen compatibility, the bitumen is not temperature sensitive, does not cross link in prolonged storage at high temperature and does not require a special bitumen composition with hazardous components.

The bitumen-polyethylene blend composition used in the invention should have a softening point of 115°C to 128°C, e.g. 118°C to 124°C, and a penetration of 10 dmm to 15 dmm, e.g. 10 dmm to 12 dmm. The softening point (ring and ball test) and penetration values are measured in accordance with the Institute of Petroleum specifications, respectively IP 58/83 and IP 49/83. The bitumen composition is prepared by heating the bitumen to about 180°C to 200°C, e.g. 190°C, and the polyethylene polymer is then added typically with the high density polyethylene added first and the polyethylene polymer mixed with continuous agitation with moderate shear for sufficient time, e.g. over 60 minutes, until a smooth, homogeneous dispersion is obtained, that is, until the bitumen is dispersed as a dispersed phase in a continuous phase of the polyethylene. Generally, the quality of the dispersion may be monitored wherein a sample of the blend is viewed under ultraviolet illumination to affect fluorescence of the polymer so the quality of the blend can be visually assessed.

The bitumen composition is employed as a backing layer for floor laminates, particularly carpet tiles by heating the bitumen composition and applying one or more coating layers to the back surface of a fibrous face floor surface covering. Generally, the bitumen composition is applied at a temperature of 160°C to 180°C, e.g. 165°C to 170°C, at the coating or application station which is lower than normal coating temperature with blown bitumen and at a viscosity of 6,000 cps to 35,000 cps(6 to 35 pascal seconds), e.g. 20,000 cps to 35,000 cps (20 to 35 pascal 35 seconds). Generally, oxidized bitumens are applied as backing layers at temperatures of 180°C to 190°C; however, at lower temperatures of 160°C to 170°C and less, the viscosity of the high density polyethylene (HDPE) and low density polyethylene (LDPE) modified straight run bitumen does not increase as rapidly as the viscosity of blown or oxidized bitumen, so that application at lower temperatures with resulting savings in energy cost and the use of less expensive secondary backing are obtained. The lower application temperature permits the use of low melting point, 160°C to 170°C, 100% polypropylene, non-woven or other sheet material as a secondary backing. The bitumen may be applied in any manner, such as by a lick roller or a lay-in technique.

The bitumen composition employs straight run bitumen of high asphaltene and resin content and which has a penetration of 100 dmm or less, typically less than about 60 dmm, e.g. 20 dmm to 60 dmm particularly 40 to 60 dmm. Straight run bitumen is more readily available and of lower cost and lower viscosity than blown bitumen. Generally, the bitumen consists all of straight run bitumen; however, very minor amounts, for example, up to 10% by weight of other bitumens, such as blown bitumen or other hydrocarbon products, can be incorporated if desired.

The straight run bitumen is blended with a mixture of high density and low density polyethylene polymers in an amount sufficient to form a dominant, continuous phase of the polyethylene polymer. Once the polyethylene concentration has reached the phase transition level, further polyethylene polymer addition does not increase the softening point of the bitumen blend. The polyethylene is employed in total amounts of up to 12% by weight, e.g. from 4 to 10%, preferably 8% to 10%. For example, the HDPE may range from about 0.5% to 3.0% by weight, such as 1% to 2%, while the amount of LDPE may range from about 3.0% to 9.5% by weight, such as 3% to 6%. It has been found that the use of a moderate density polyethylene is not satisfactory due to the large concentrations required, and that processing and cost factors make its use unsatisfactory. The use of low density polyethylene alone is also not satisfactory to produce a commercially acceptable bitumen backing for carpet tile of defined penetration value and softening point.

The properties of polyethylenes are dependent upon their molecular configurations, molecular weights and molecular weight distributions. An important factor is the selection and blending of the polyethylenes used. Commercially, polyethylenes are graded in terms of the density and the melt flow index, with both measurements necessary to define any particular grade. The melt flow index (MFI) is the number of grams of a polymer that can be forced through a 0.0825-inch (2.1 mm) orifice in 10 minutes at 190°C by a pressure of 2,160 grams (ASTM D1238-70).

Typically, the high density polyethylene component should have a density between about 0.945 g/cm³ and 0.97 g/cm³, the melt flow index being greater than about 0.2, such as 0.2 to 10, e.g. 4 to 6. The low density component of this invention should have a density of out between 0.915 g/cm³ and 0.93 g/cm³, the melt flow index being greater than about 0.2, such as 2 to 10.

Preferably, the bitumen composition used includes an inert mineral filler material to reduce cost and to prevent cold flow of the composition in use, such as slate dust or limestone, in amounts of at least 40% by weight based on the weight of the final bitumen composition such as 40% to 65% by weight, and typically 50% to 55%. The bitumen composition may contain a wide variety of various modifiers and additives commonly used in carpet tile backing layers, provided such modifiers and additives are not detrimental to the accepted quality of the backing layer. such modifiers and additives may include, but not be limited to: antistatic agents, such as fatty amines; and carbon black, including master batch mixtures of polyethylene and carbon black, for example, HDPE and LDPE with carbon black used for incorporating into the bitumen blend; other fillers; pigments for color; and minor amounts of other polymers and additives.

The invention will now be described for the purposes of illustration only in connection with certain non limiting embodiments.

### Description of the Embodiments

A Hubis mixer was charged with 311 Kg of 50 penetration (IP 49/83) straight run bitumen at 190°C, and the two polyethylenes were added in amounts of 28 kg and 10.5 kg, and the mixing cycle started. The LDPE has a density of 0,92 g/cm³, and the HDPE a density of 0,95 g/cm³. After 10 minutes, a sample of the blend was removed for ultraviolet examination to assess blend quality. The mixing was then continued in 10-minute cycles until no further improvement in the quality of the dispersion could be observed. When this point was reached, 350 Kgs of limestone filler was added to produce a final batch weight of 700 Kgs.

The batch was used to manufacture sample tiles employing a lick roller to apply the bitumen to the back surface of a flooring substrate with the bitumen temperature at the application point of 153°C to 162°C. The polyethylene-bitumen composition had a softening point of 121°C (IP 58/83), a penetration of 10 dmm (IP 49/83), and a viscosity temperature profile as follows:

| Viscosity (pascal seconds) | Temperature (°C) |
|---|---|
| 47.0 | 130 |
| 30.0 | 140 |
| 20.0 | 150 |
| 14.0 | 160 |
| 9.5 | 170 |
| 7.5 | 180 |
| 6.0 | 190 |

Dispersion Quality - It was found that the best obtainable dispersion was produced after 20 to 30 minutes, using the high speed disintegrator. Carpet tiles so manufactured were compared with similar commercial carpet tiles known as Collage (a trademark of Interface Flooring Systems, Inc.) as a control tile and made in the same manner, except with blown bitumen applied at 190° C.

| Full Scale Industrial Trial | | |
|---|---|---|
| Results | | |
| Aachen Test | Collage Control Tile | Polymer Modified Tile |
| Change in dimensions after 24 hours conditioning | Wa.1 N.A. | Wa.1 -.02 |
| | Wa.2 N.A. | Wa.2 -.04 |
| | Wt.1 N.A. | Wt.1 +.02 |
| | Wt.2 N.A. | Wt.2 -.02 |
| | | |
| Change in dimensions after 2 hours at 60°C | Wa.1 -.106 | Wa.1 -.130 |
| | Wa.2 -.121 | Wa.2 -.016 |
| | Wt.1 -.029 | Wt.1 -.012 |
| | Wt.1 -.016 | Wt.2 -.022 |
| | | |
| Change in dimensions after 2 hours water at 20°C | Wa.1 -.068 | Wa.1 -.063 |
| | Wa.2 -.084 | Wa.2 -.020 |
| | Wt.1 .001 | Wt.1 .033 |
| | Wt.2 .002 | Wt.2 .031 |
| | | |
| Change in dimensions after 24 hours at 60°C | Wa.1 -.230 | Wa.1 -.166 |
| | Wa.2 -.244 | Wa.2 -.186 |
| | Wt.1 -.140 | Wt.2 -.014 |
| | Wt.2 -.072 | Wt.2 -.056 |
| | | |
| Change in dimensions after 48 hours reconditioning at 20°C, 65 % RH | Wa.1 -.266 | Wa.1 -.126 |
| | Wa.2 -.228 | Wa.2 -.178 |
| | Wt.1 -.117 | Wt.1 0 |
| | Wt.2 -.068 | Wt.2 -.034 |

Limitations of +0.2% to -0.4% are generally acceptable, except for U.S.A. and France, -0.1% to -0.2%.

| Tuft Withdrawal Test | | |
|---|---|---|
| | Control Tile | Polymer Modified Tile |
| Mean force required to remove tuft | 4.26 Newtons | 4.40 Newtons |

| Static Conductivity Test | | |
|---|---|---|
| Conditions: 19.9° C, 29% Relative Humidity | | |

| | Control Tile | Polymer Modified Tile |
|---|---|---|
| IBM | 1.2x10*11 ohms | 7.75x10*10 ohms |
| ICL | 1.2x10*11 ohms | 2.9x10*11 ohms |

### Adhesion/Delamination Test

Again the adhesion within the polymer modified tile provide to be superior to that exhibited within the oxidized tile.

The low and high density polyethylene modified straight run bitumen blend provides a unique bitumen backing for floor laminates and provides energy saving, processing and manufacturing advantages.

## Claims

1. A floor covering having a bitumen composition backing layer, which bitumen composition comprises a blend of:
a) a dispersed phase of straight run bitumen having a penetration value of up to 100 tenths of a millimetre (dmm); and b) up to 12 percent based on the weight of the bitumen composition, of, as continuous phase, a mixture of a high density polyethylene having a melt flow index (ASTM D1238-70) of at least 0.2, and a low density polyethylene having a melt flow index (ASTM D1238-70) of at least 0 2;
and optionally comprises at least 40 percent, based on the weight of the filled bitumen composition, of a mineral filler material;
the bitumen composition having a softening point of 115°C to 128°C measured in accordance with IP 58(83) and a penetration value of 10 to 15 tenths of a millimetre (dmm) measured in accordance with IP 49(83).

2. A floor covering according to claim 1 wherein said composition also comprises up to 10 percent by weight of the composition of blown bitumen as a dispersed phase.

3. A floor covering according to claim 1 or 2 wherein the bitumen composition contains from 3 percent to 9.5 percent by weight of the composition of a low density polyethylene and from 0.5 percent to 3.0 percent by weight of the composition of a high density polyethylene.

4. A floor covering according to any one of the preceding claims wherein the high density polyethylene has a density of from 0.945 gm/cm³ to 0.970 g/cm³ and the low density polyethylene has a density of from 0.915 g/cm³ to 0.930 g/cm³.

5. A floor covering according to any one of the preceding claims wherein the bitumen composition contains from 4 percent to 10 percent by weight of the bitumen composition of the mixture of high density polyethylene and low density polyethylene.

6. A floor covering according to any one of the preceding claims wherein the penetration value of the straight run bitumen is from 40 to 60 tenths of a millimetre (dmm).

7. A floor covering according to any one of the preceding claims wherein the viscosity of the bitumen composition is from 6 pascal seconds to 35 pascal seconds at a temperature of 160° to 180°C.

8. A floor covering according to any one of the preceding claims wherein the high and low density polyethylenes each have a melt flow index of 0.2 to 10.

9. A floor covering according to any one of the preceding claims wherein the floor covering comprises a carpet tile having a fibrous face surface and a back surface, the bitumen composition being bonded to the back surface.

10. A floor covering according to claim 9 which includes a non-woven polypropylene secondary backing sheet bonded to the back surface of the bitumen composition.

11. A floor covering according to any one of the preceding claims wherein the bitumen composition has a penetration value of 10 to 12 tenths of a millimetre (dmm) and a softening point of 118°C to 124°C.

## Patentansprüche

1. Fußbodenbelag mit einer Rückenbeschichtung aus einer Bitumenzusammensetzung, welche Bitumenzusammensetzung ein Gemisch enthält aus:
(a) einer dispersen Phase aus Destillationsbitumen mit einem Penetrationswert von bis zu 100 Zehntel Millimeter (dmm); und
(b) als kontinuierliche Phase, bis zu 12 Prozent, bezogen auf das Gewicht der Bitumenzusammensetzung, eines Gemischs aus einem Polyethylen hoher Dichte mit einem Schmelzfluß-Index (ASTM D1238-70) von mindestens 0,2, und einem Polyethylen niedriger Dichte mit einem Schmelzfluß-Index (ASTM D1238-70) von mindestens 0,2;
und wahlweise mindestens 40 Prozent, bezogen auf das Gewicht der gefüllten Bitumenzusammensetzung, eines mineralischen Füllstoffs;
wobei die Bitumenzusammensetzung einen Erweichungspunkt aufweist von 115°C bis 128°C, wie gemäß IP 58 (83) gemessen, und einen Penetrationswert von 10 bis 15 Zehntel Millimeter (dmm), wie gemäß IP 49 (83) gemessen.

2. Fußbodenbelag nach Anspruch 1, wobei die Zusammensetzung auch bis zu 10 Gewichtsprozent der Zusammensetzung aus Oxidationsbitumen als einer dispersen Phase umfaßt.

3. Fußbodenbelag nach Anspruch 1 oder 2, wobei die Bitumenzusammensetzung zu 3 Prozent bis 9,5 Prozent des Gewichts der Zusammensetzung ein Polyethylen niedriger Dichte und zu 0,5 Prozent bis 3,0 Prozent des Gewichts der Zusammensetzung ein Polyethylen hoher Dichte enthält.

4. Fußbodenbelag nach einem der vorangehenden Ansprüche, wobei das Polyethylen hoher Dichte eine Dichte von 0,945 g/cm³ bis 0,970 g/cm³ und das Polyethylen niedriger Dichte eine Dichte von 0,915 g /cm³ bis 0,930 g/cm³ aufweist.

5. Fußbodenbelag nach einem der vorangehenden Ansprüche, wobei die Bitumenzusammensetzung zu 4 Prozent bis 10 Prozent des Gewichts der Bitumenzusammensetzung des Gemischs aus Polyethylen hoher Dichte und Polyethylen niedriger Dichte enthält.

6. Fußbodenbelag nach einem der vorangehenden Ansprüche, wobei der Penetrationswert des Destillationsbitumen 40 bis 60 Zehntel Millimeter (dmm) beträgt.

7. Fußbodenbelag nach einem der vorangehenden Ansprüche, wobei die Viskosität der Bitumenzusammensetzung 6 Pascalsekunden bis 35 Pascalsekunden bei einer Temperatur von 160°C bis 180°C beträgt.

8. Fußbodenbelag nach einem der vorangehenden Ansprüche, wobei die Polyethylene mit hoher und mit niedriger Dichte jeweils einen Schmelzfluß-Index von 0,2 bis 10 besitzen.

9. Fußbodenbelag nach einem der vorangehenden Ansprüche, wobei der Fußbodenbelag eine Bodenfliese mit einer fasrigen Oberseite und einer Unterseite umfaßt, an welche Unterseite die Bitumenzusammensetzung gebunden ist.

10. Fußbodenbelag nach Anspruch 9, welche einer nicht-gewebte Polypropylen-Sekundärrückenplatte umfaßt, die an die Unterseite der Bitumenzusammensetzung gebunden ist.

11. Fußbodenbelag nach einem der vorangehenden Ansprüche, wobei die Bitumenzusammensetzung einen Penetrationswert von 10 bis 12 Zehntel Millimeter (dmm) und einen Erweichungspunkt von 118°C bis 124°C aufweist.

## Revendications

1. Revêtement de sol ayant une couche de renfort en composition de bitume, ladite composition de bitume comprenant un mélange de :
a) une phase dispersée de bitume de distillation directe ayant une valeur de pénétration allant jusqu'à 100 dixièmes de millimètre (dmm) ; et
b) jusqu'à 12 % en poids, sur la base du poids de la composition de bitume, d'un mélange, sous la forme d'une phase continue, d'un polyéthylène haute densité ayant un indice de fluage (ASTM D1238-70) d'au moins 0,2, et d'un polyéthylène basse densité ayant un indice de fluage (ASTM D1238-70) d'au moins 0,2 ;
et comprenant facultativement au moins 40 %, sur la base du poids de la composition de bitume chargée, d'une charge minérale ;
la composition de bitume ayant un point de ramollissement de 115 °C à 128 °C, mesuré selon IP 58(83), et une valeur de pénétration de 10 à 15 dixièmes de millimètre (dmm), mesurée selon IP 49(83).

2. Revêtement de sol selon la revendication 1, dans lequel ladite composition comprend aussi jusqu'à 10 % en poids, par rapport à la composition, de bitume soufflé en tant que phase dispersée.

3. Revêtement de sol selon la revendication 1 ou 2, dans lequel la composition de bitume contient de 3 % à 9,5 % en poids, par rapport à la composition, d'un polyéthylène basse densité et de 0,5 % à 3,0 % en poids, par rapport à la composition, d'un polyéthylène haute densité.

4. Revêtement de sol selon l'une quelconque des revendications précédentes, dans lequel le polyéthylène haute densité a une densité de 0,945 g/cm³ à 0,970 g/cm³ et le polyéthylène basse densité a une densité de 0,915 g/cm³ à 0,930 g/cm³.

5. Revêtement de sol selon l'une quelconque des revendications précédentes, dans lequel la composition de bitume contient de 4 % à 10 % en poids, par rapport à la composition de bitume, du mélange de polyéthylène haute densité et de polyéthylène basse densité.

6. Revêtement de sol selon l'une quelconque des revendications précédentes, dans lequel la valeur de pénétration du bitume de distillation directe est de 40 à 60 dixièmes de millimètre (dmm).

7. Revêtement de sol selon l'une quelconque des revendications précédentes, dans lequel la viscosité de la composition de bitume est de 6 Pa.s à 35 Pa.s à une température de 160 à 180 °C.

8. Revêtement de sol selon l'une quelconque des revendications précédentes, dans lequel les polyéthylènes de haute et basse densité ont chacun un indice de fluage de 0,2 à 10.

9. Revêtement de sol selon l'une quelconque des revendications précédentes, dans lequel le revêtement de sol comprend une dalle de moquette ayant une surface avant fibreuse et une surface arrière, la composition de bitume étant liée à la surface arrière.

10. Revêtement de sol selon la revendication 9, qui inclut une feuille de renfort secondaire non tissée en polypropylène, liée à la surface arrière de la composition de bitume.

11. Revêtement de sol selon l'une quelconque des revendications précédentes, dans lequel la composition de bitume a une valeur de pénétration de 10 à 12 dixièmes de millimètre (dmm) et un point de ramollissement de 118 °C à 124 °C.
